# FASCICULE DE BREVET EUROPEEN

(11) **EP 2 704 926 B1**
(45) Date de publication et mention de la délivrance du brevet: **19.07.2017**
(21) Numéro de dépôt: 12717305.2
(22) Date de dépôt: 27.04.2012
(51) Int. Cl.: B60R 25/02

(54) **DISPOSITIF ANTIVOL POUR COLONNE DE DIRECTION ET COLONNE DE DIRECTION ASSOCIÉE**
DIEBSTAHLSCHUTZVORRICHTUNG FÜR LENKSÄULE UND ENTSPRECHENDE LENKSÄULE
ANTITHEFT DEVICE FOR A STEERING COLUMN, AND RELATED STEERING COLUMN

(30) Priorité: 03.05.2011 FR 1101365
(43) Date de publication de la demande: 12.03.2014
(73) Titulaire: U-Shin France, 94000 Créteil (FR)
(72) Inventeur: PERRIN, Christophe, F-94046 Creteil Cedex (FR); DELLA-FIORENTINA, Alix, F-94046 Creteil Cedex (FR)
(74) Mandataire: Gaillarde, Frédéric F. Ch.
(86) Numéro de dépôt international: PCT/EP2012/057751
(87) Numéro de publication internationale: WO 2012/150188

(56) Documents cités:
- DE-U1- 29 806 390
- FR-A1- 2 909 953
- FR-A1- 2 937 599
- FR-A1- 2 937 601

## Description

La présente invention est relative à un dispositif antivol pour colonne de direction. L'invention trouve une application particulièrement avantageuse dans le domaine automobile.

Elle concerne plus particulièrement un antivol de véhicule faisant intervenir un organe de verrouillage ou pêne de verrouillage de la colonne de direction d'un véhicule lors du retrait de la clé de contact. À cet effet, le pêne est monté mobile dans le dispositif antivol entre une position de verrouillage de la colonne et une position de libération de la colonne.

De tels antivols comprennent généralement un verrou avec un stator et un rotor actionné par une clé codée et commandant notamment au cours de sa rotation le mouvement du pêne.

Plus précisément, la commande du pêne peut s'effectuer par une tirette reliée à une came elle-même solidaire du rotor du verrou, ladite came ayant pour fonction de transformer le mouvement de rotation du rotor en un mouvement de translation de la tirette et du pêne associés.

Le verrou permet donc, via la tirette, de déverrouiller le pêne de la position où il bloque en rotation la colonne de direction.

Par un geste de malveillance, une personne pourrait désolidariser le verrou du dispositif antivol afin d'accéder à la tirette. En ayant accès à cette tirette, la personne malveillante pourrait déplacer le pêne de sa position de verrouillage où il bloque la colonne de direction vers une position de libération dans laquelle le pêne libère la colonne de direction.

Pour limiter cet inconvénient, il a été proposé dans le document FR 2 909 953 au nom de la Demanderesse des moyens de blocage du pêne de verrouillage. Ces moyens de blocage comprennent un élément déclencheur solidaire du verrou, et un élément de blocage, qui lorsque l'élément déclencheur est actionné par la rupture du corps d'antivol ou l'arrachage du rotor, se déplace dans une position où il peut bloquer le pêne en translation sous l'action d'un ressort.

Cependant, dans le cas d'une tentative d'effraction sans rupture du corps d'antivol ou d'arrachage du rotor, de tels moyens de blocage ne se déclenchent pas. On parle notamment d'effraction douce qui peut se faire par exemple en réalisant un perçage pour accéder à la tirette.

L'invention a pour objectif de proposer une fonction supplémentaire de blocage du pêne de verrouillage de la colonne de direction en cas de tentative d'effraction ne provoquant pas la rupture du corps d'antivol ou l'arrachage du rotor.

À cet effet, l'invention a pour objet un dispositif antivol pour colonne de direction de véhicule automobile, ledit dispositif comportant :
- un pêne monté mobile en translation dans ledit dispositif entre une position de verrouillage de la colonne de direction et une position de libération de ladite colonne, et
- un verrou comprenant un moyen de commande de déplacement dudit pêne, ledit verrou étant mobile entre une position neutre et une position de fonctionnement,
dans lequel ledit dispositif comporte un moyen de blocage en translation dudit pêne commandé par ledit moyen de commande entre une position active dans laquelle ledit moyen de blocage bloque ledit pêne en translation de manière à maintenir ledit pêne en position de verrouillage lorsque ledit verrou est en position neutre, et une position de repos dans laquelle ledit moyen de blocage libère ledit pêne lorsque ledit verrou est en position de fonctionnement caractérisé en ce que ledit moyen de blocage comprend un levier pivotant présentant une première extrémité en contact avec ledit moyen de commande et une deuxième extrémité opposée configurée pour s'opposer au déplacement dudit pêne.

Un tel dispositif antivol permet d'augmenter la sécurité en cas de vol ou de tentative d'effraction par exemple en cas de crochetage de la tirette. La commande du moyen de blocage par le moyen de commande, tel que la came solidaire au rotor du verrou, assure une plus grande fiabilité du dispositif. En effet, ce moyen de blocage est systématiquement activé lorsque le verrou est en position neutre et que la clé de contact est retirée du verrou.

Ledit dispositif peut en outre comporter une ou plusieurs caractéristiques suivantes, prises séparément ou en combinaison :
- ladite deuxième extrémité est configurée pour intercepter la trajectoire dudit pêne, de manière à bloquer directement ledit pêne;
- ladite deuxième extrémité est configurée pour intercepter un organe de commande dudit moyen de commande, de manière à bloquer indirectement ledit pêne via ledit organe de commande;
- ledit levier présente une première branche terminée par la première extrémité et une deuxième branche terminée par la deuxième extrémité, lesdites branches étant sensiblement inclinées l'une par rapport à l'autre, et l'axe de pivotement dudit levier se situe à la jonction entre lesdites branches;
- ledit levier comporte un pivot à la jonction entre les deux branches;
- ledit levier présente une forme générale sensiblement en « L ;
- ledit moyen de commande présente une rampe de guidage dudit moyen de blocage;
- le verrou comporte un rotor et ledit moyen de commande comporte une came solidarisée audit rotor pour commander le déplacement dudit pêne et le mouvement dudit moyen de blocage;
- ladite came présente une surface de came et une cavité sur la surface de came pour recevoir la première extrémité dudit levier en position active, et ladite cavité est délimitée par une face sensiblement en pente formant rampe de guidage pour la première extrémité dudit levier ;
- ledit moyen de commande comporte en outre une tirette commandée en déplacement par ladite came;
- ledit levier est monté mobile dans un évidement complémentaire de la tirette.
- ledit moyen de blocage comporte un moyen de rappel en position active;
- ledit moyen de rappel comporte un ressort de compression;
- ledit dispositif comporte en outre un moyen de blocage supplémentaire dudit pêne comprenant un élément déclencheur solidarisé au rotor dudit verrou, un élément de blocage relié audit élément déclencheur, et un moyen de rappel configuré pour solliciter ledit élément de blocage vers une position active de blocage dudit pêne lorsque ledit élément déclencheur est activé.

L'invention concerne aussi une colonne de direction de véhicule automobile comprenant un dispositif antivol tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente schématiquement une coupe d'un corps d'antivol d'un dispositif antivol selon l'invention,
- la figure 2 montre schématiquement en perspective un moyen de blocage d'un pêne du dispositif antivol interposé entre le pêne et un moyen de commande de déplacement du pêne,
- la figure 3a est une vue en perspective représentant plus en détail un moyen de commande en déplacement du pêne et le pêne,
- la figure 3b est une autre vue en perspective représentant plus en détail le moyen de commande en déplacement du pêne et le pêne,
- la figure 3c est une vue de côté représentant le moyen de commande en déplacement du pêne et le pêne,
- la figure 3d est encore une autre vue en perspective représentant plus en détail le moyen de commande en déplacement du pêne et le pêne,
- la figure 4 est une vue partielle représentant de façon schématique le moyen de blocage en position active pour bloquer le pêne en translation,
- la figure 5 est une vue de côté schématique du moyen de blocage en position active entre le pêne et le moyen de commande,
- la figure 6 est une vue partielle représentant de façon schématique le moyen de blocage en position de repos, et
- la figure 7 est une vue de côté schématique du moyen de blocage en position de repos entre le pêne et le moyen de commande, libérant la trajectoire du pêne.

Dans ces figures, les éléments sensiblement identiques portent les mêmes références.

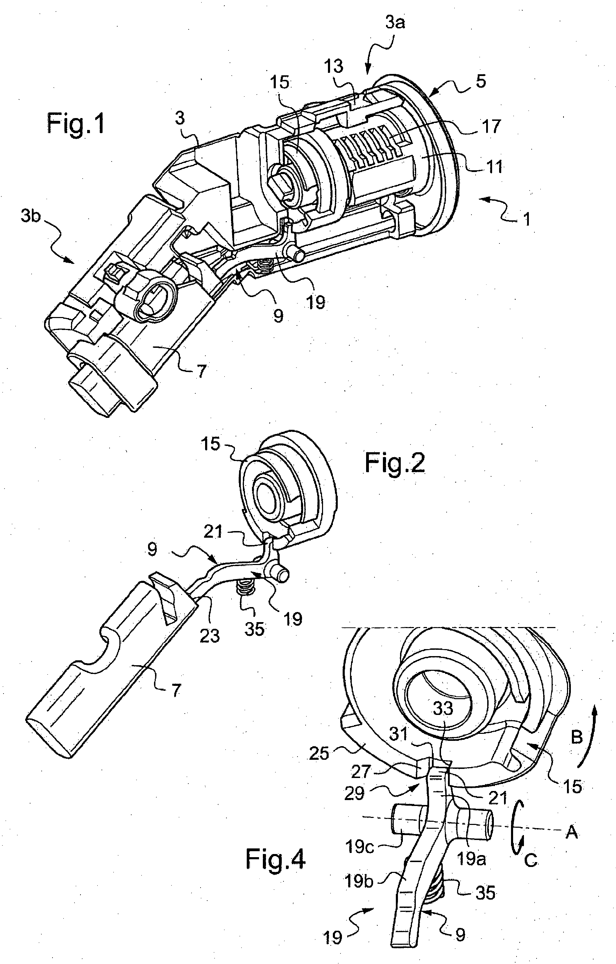

On a représenté sur la figure 1, un dispositif antivol pour véhicule automobile, selon l'invention, désigné par la référence générale 1. Ce dispositif antivol 1 est destiné à commander le démarrage d'un moteur du véhicule et le verrouillage d'une colonne de direction du véhicule (non représentée).

Le dispositif antivol 1 présente un corps d'antivol 3.

Ce corps d'antivol 3 comprend un verrou 5, un pêne 7 de verrouillage de la colonne de direction (non représentée), et un moyen de blocage 9 (mieux visible sur la figure 2) du pêne 7 de verrouillage.

Dans l'exemple illustré sur la figure 1, le corps d'antivol 3 présente une première partie avant 3a logeant le verrou 5 et une deuxième partie arrière 3b logeant le pêne 7.

Les termes « avant » et « arrière » sont ici utilisés par rapport à l'accessibilité à un utilisateur. L'utilisateur a accès à la partie avant 3a du corps antivol 3 pour insérer sa clé de contact. La partie arrière 3b du corps d'antivol 3 est quant à elle à proximité de la colonne de direction.

Les deux parties avant 3a et arrière 3b sont sensiblement inclinées l'une par rapport à l'autre.

Le verrou 5 comprend un rotor 11 monté rotatif dans un stator 13.

Selon le mode de réalisation illustré, le verrou 5 présente en outre une came 15 solidarisée au rotor 11, par exemple agencée en bout de rotor.

La came 15 présente un corps de forme générale cylindrique coaxiale au rotor 11.

Le rotor 11 entraîne donc en rotation cette came 15.

Le verrou 5 comprend également les éléments classiques tels que des paillettes (non visibles) insérées dans des logements 17 permettant de lier en rotation le stator 13 et le rotor 11 lorsque la clé de contact n'est pas introduite dans le rotor 11, et permettant que le stator 13 et le rotor 11 soient libres en rotation l'un par rapport à l'autre lorsque la clé est insérée dans le rotor 11. Les paillettes 17 servent alors à immobiliser la clé dans le rotor 11 en s'insérant dans les encoches complémentaires de la clé. Lorsque l'utilisateur tourne la clé de contact; cette clé entraîne le rotor 11 du verrou 5 en rotation.

Ainsi, le verrou 5 est mobile entre une position neutre et au moins une position de fonctionnement.

Lorsque l'utilisateur tourne la clé de contact dans le rotor 11, le verrou est en position de fonctionnement de façon à commander par exemple les accessoires du véhicule ou le démarrage. On peut prévoir des positions angulaires différentes du rotor 11 pour la commande des accessoires et du démarrage.

En position neutre, la clé n'est pas introduite dans le rotor 11 ou la clé est insérée mais n'est pas tournée vers une des positions angulaires de fonctionnement.

Le pêne 7 est monté coulissant dans le corps d'antivol 3. À cet effet, le corps d'antivol 3 peut présenter au niveau de sa partie arrière 3b un guide pêne pour le coulissement du pêne 7.

Le pêne 7 est mobile entre une position de verrouillage de la colonne de direction (non représentée) et une position de libération de cette colonne.

Dans la position de verrouillage, le pêne 7 engage de manière classique une partie de la colonne de direction (non représentée) pour la bloquer en rotation. Dans cette position de verrouillage, le pêne 7 fait généralement saillie par rapport au corps d'antivol 3.

Par contre en position de libération, le pêne 7 est escamoté à l'intérieur du corps d'antivol 3 pour libérer la colonne.

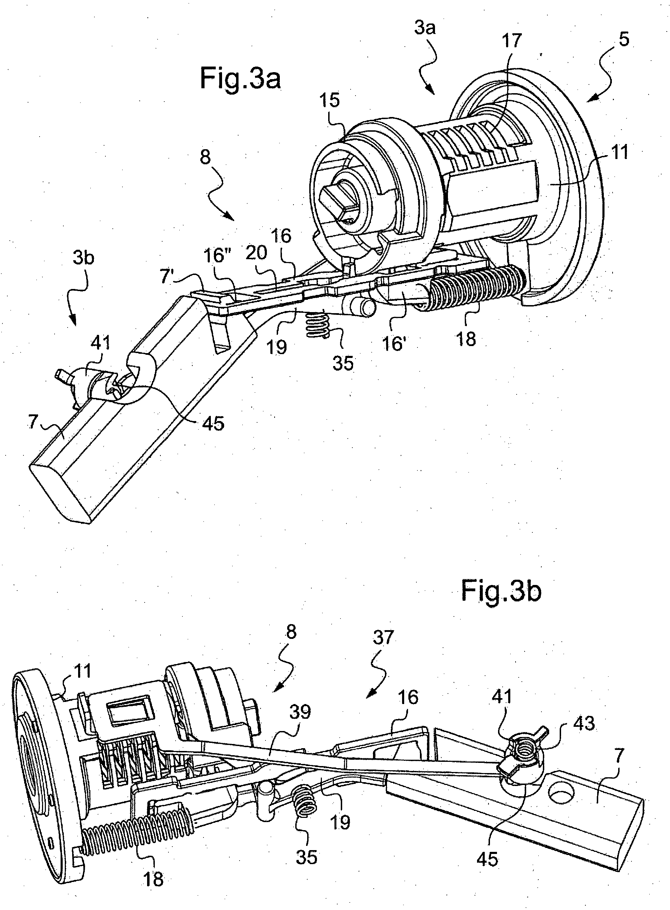

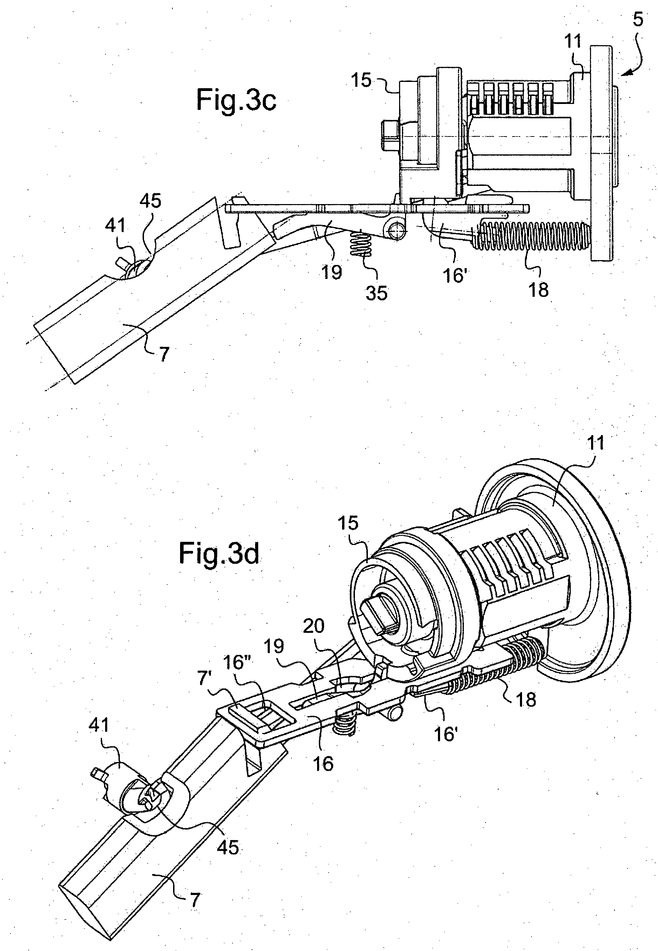

Le verrou 5 comprend donc un moyen de commande 8 (cf figures 3a à 3d) du déplacement du pêne 7 de verrouillage entre les positions de verrouillage et de libération de la colonne de direction (non représentée). Le moyen de commande 8 commande le déplacement du pêne 7 en position de verrouillage lorsque le verrou 5 est en position neutre. En position de fonctionnement du verrou 5, le pêne 7 reste en position de libération de la colonne.

À cet effet, le moyen de commande 8 peut comprendre une tirette 16 et un moyen de rappel, tel qu'un ressort 18 .

Généralement, c'est le rotor 11 ou la came 15 qui commande le déplacement de la tirette 16 et donc du pêne 7 lorsque l'utilisateur tourne la clé de contact dans le rotor 11 du verrou 5.

La tirette 16 est reliée d'une part à la came 15 et d'autre part au pêne 7.

Plus précisément, comme on le remarque sur les figures 3a,3b, la tirette 16 présente un doigt basculant de guidage 16' qui coopère avec la came 15. En effet, lorsque la came 15 tourne, le doigt de guidage 16' suit une pente de guidage complémentaire de la came 15 et la tirette 16 est entraînée en translation. Selon l'exemple illustré, lorsque la clé tourne le rotor 11, la tirette 16 est entraînée en translation vers la partie avant 3a du corps d'antivol 3.

D'autre part, la tirette 16 présente une ouverture 16" dans laquelle vient s'insérer une patte de liaison 7' complémentaire du pêne 7. On assure ainsi la liaison entre la tirette 16 et le pêne 7.

Lorsque le verrou 5 est en position neutre, le ressort de rappel 18 sollicite le pêne 7 vers la position de verrouillage de la colonne.

Le moyen de commande 8 du déplacement du pêne 7 comprend donc aussi bien un organe de commande en rotation tel que le rotor 11 ou la came 15, qu'un organe de commande en translation tel que la tirette 16.

Le moyen de blocage 9 est quant à lui également commandé par le moyen de commande 8, par exemple par la came 15.

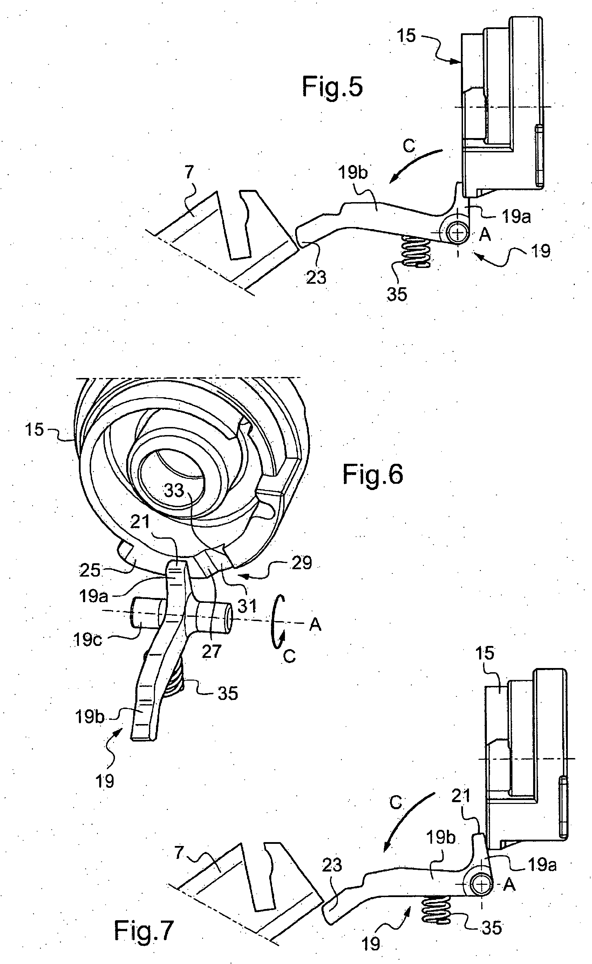

Ce moyen de blocage 9 est mobile entre une position active, visible sur les figures 4 et 5, et une position de repos visible sur les figures 6 et 7.

Dans la position active (figures 4 et 5) le moyen de blocage 9 bloque le pêne 7 et l'empêche de reculer pour venir en position de libération de la colonne. Le pêne 7 reste donc en position de verrouillage de la colonne.

Ce blocage en translation du pêne 7 peut se faire par le moyen de blocage 9 soit en agissant directement sur le pêne 7, comme dans le mode de réalisation illustré, soit de manière indirecte en agissant sur un organe de commande du moyen de commande 8 du déplacement du pêne 7, comme par exemple la tirette 16.

Au contraire, dans la position de repos du moyen de blocage 9 (figures 6 et 7), ce dernier libère le pêne 7 qui peut sans obstacle libérer la colonne.

Lorsque le verrou 5 est en position neutre, le moyen de blocage 9 se place en position active dans laquelle le moyen de blocage 9 bloque le pêne 7 dans sa position de verrouillage de la colonne (non représentée).

En position de fonctionnement du verrou 5, le moyen de blocage 9 reste en positon de repos.

Le moyen de blocage 9 est par exemple interposé entre le verrou 5 et le pêne 7 de verrouillage. Plus précisément, le moyen de blocage 9 peut être interposé entre le moyen de commande du déplacement du pêne 7 et le pêne 7.

Selon le mode de réalisation illustré, le moyen de blocage 9 est interposé entre la came 15 et le pêne 7.

En alternative, on peut prévoir que le moyen de blocage 9 soit entre la came 15 et la tirette par exemple, pour un blocage indirect du pêne 7 via la tirette.

En se référant aux figures 2 et 4, le moyen de blocage 9 peut présenter un levier 19 monté pivotant autour d'un axe de pivotement A.

En se référant à nouveau aux figures 3a à 3d, le levier 19 est monté mobile dans un évidement complémentaire 20 de la tirette 16.

Ce levier 19 est mobile entre la position active, visible sur les figures 4 et 5, et la position de repos visible sur les figures 6 et 7.

Dans la position active (figures 4 et 5) le levier 19 forme un obstacle dans la trajectoire du pêne 7 et empêche le pêne 7 de reculer pour venir en position de libération de la colonne. Le pêne 7 reste en position de verrouillage de la colonne.

Au contraire, dans la position de repos (figures 6 et 7), le levier 19 libère la trajectoire du pêne 7 qui peut sans obstacle libérer la colonne.

À titre d'exemple, le levier 19 présente une première branche 19a et une deuxième branche 19b sensiblement inclinées l'une par rapport à l'autre. Ce levier 19 est par exemple sensiblement en « L » ou présente une forme sensiblement coudée.

Cette forme du levier 19 est adaptée à la forme du corps d'antivol 3 en deux parties 3a,3b.

Le levier 19 présente une première extrémité 21 et une deuxième extrémité opposée 23.

Dans l'exemple illustré, la première extrémité 21 termine la première branche 19a du levier 19, et la deuxième extrémité 23 termine la deuxième branche 19b du levier 19.

Les deux branches 19a, 19b sont jointes au niveau de l'axe de pivotement A du levier 19.

Selon l'exemple représenté sur les figures, le levier 19 comporte en outre un pivot 19c à la jonction entre les deux branches 19a,19b.

Selon le mode de réalisation illustré, la première extrémité 21 du levier 19 est en contact avec la came 15.

Plus précisément, la came 15 présente une surface de came 25 et une rampe de guidage 27 de la première extrémité 21 du levier 19 pour entraîner le pivotement du levier 19 entre les positions active (figures 4,5) et de repos (figures 6,7), lorsque la came 15 est actionnée.

En variante, tout autre moyen de commande en translation ou en rotation peut être prévu, et présente une rampe de guidage de la première extrémité 21 du levier lorsque le moyen de commande est actionné.

Selon le mode de réalisation illustré sur les figures 4 et 6, la came 15 présente une cavité 29 sur la surface de came 25. Cette cavité 29 est délimitée par une première face sensiblement en pente formant la rampe 27 de guidage, une deuxième face 31 radiale délimitant le fond de la cavité 29, et une troisième face 33 axiale opposée à la première face formant rampe 27.

La cavité 29 est prévue pour recevoir la première extrémité 21 du levier 19 en position active (cf figures 4 et 5). La première extrémité 21 est alors dans le fond de la cavité 29.

Ainsi, lorsque le rotor 11 entraîne en rotation la came 15 selon la flèche B, la première extrémité 21 suit la rampe 27 jusqu'à se positionner sur la surface 25 surélevée par rapport à la cavité 29, comme l'illustre la figure 6. La première extrémité 21 du levier se place donc en haut de la rampe 27 de la cavité 29.

Le levier 19 est alors en position de repos.

En ce qui concerne la deuxième extrémité 23, elle est disposée du côté du pêne 7 de verrouillage de la colonne de direction.

Comme l'illustre la figure 5, en position active du levier 19, la deuxième extrémité 23 est disposée en regard de l'extrémité du pêne 7 qui est lui en position de verrouillage. Cette deuxième extrémité 23 est disposée dans la trajectoire du pêne 7.

Ainsi, dans le cas d'une tentative d'effraction si une personne mal intentionnée tente de déplacer le pêne 7 vers la position de libération de la colonne de direction, le levier 19 empêche au pêne 7 de reculer vers cette position de libération.

Lorsque la clé de contact est insérée dans le rotor 11 et l'entraîne en rotation, la came 15 est entraînée en rotation, et du fait de la rampe 27 que suit la première extrémité 21 du levier 19, le levier 19 est entraîné en pivotement autour de l'axe A selon la flèche C. La deuxième extrémité 23 du levier 19 libère la trajectoire du pêne 7. Le pêne 7 peut alors libérer la colonne de direction.

Par ailleurs, le moyen de blocage 9 comprend un moyen de rappel en position active.

On peut citer comme exemple de moyen de rappel un ressort de compression 35. Le ressort de compression 35 est placé dans l'exemple illustré entre le levier 19 et le corps d'antivol 3. Plus précisément, le ressort de compression 35 est ici disposé au niveau de la deuxième branche 19b du levier 19.

Ce ressort de compression 35 exerce un effort sur le levier sensiblement dirigé vers le haut en référence aux figures, pour rappeler le levier 19 en position active.

Ainsi, lorsque l'utilisateur retire la clé de contact du rotor 11, le verrou 5 passe en position neutre, le pêne 7 est amené en position de verrouillage de la colonne de direction, et sous l'effet du ressort 35 le levier 19 est en position active (figures 4,5) dans laquelle il empêche le recul du pêne 7 vers la position de libération.

Si par exemple par crochetage de la tirette, une personne mal intentionnée tente d'actionner le pêne 7 vers la position de libération de la colonne, la deuxième extrémité 23 du levier forme un obstacle anti-recul pour le pêne 7. La première extrémité 21 du levier 19 étant logée dans la cavité 29 du moyen de commande qui est fixe, le levier 19 est bloqué et la deuxième extrémité 23 reste dans la trajectoire du pêne 7.

Lorsque l'utilisateur insère et tourne la clé de contact dans le rotor 11, le verrou 5 passe de la position neutre à une position de fonctionnement, le moyen de commande comme par exemple la came 15 est actionnée, et la première extrémité 21 du levier 19 suit la rampe de guidage 29 ce qui entraîne le pivotement du levier 19 vers la position de repos et la deuxième extrémité 23 du levier 19 libère la trajectoire du pêne 7 (figures 6,7).

Le pêne 7 est amené en position de libération de la colonne de direction.

Le moyen de blocage est donc amené en position de repos avant le recul du pêne 7 vers la position de libération de la colonne. Cette synchronisation est obtenue grâce à la commande par la came 15.

On comprend donc qu'un tel moyen de blocage 9 présenté ici sous la forme d'un levier pivotant 19 améliore la sécurité du dispositif antivol pour colonne de direction, de façon simple et à moindre coût, face à une tentative d'effraction dite douce, c'est-à-dire sans rupture du corps d'antivol ou arrachage du rotor du verrou.

On peut prévoir en outre un moyen supplémentaire de blocage, également appelé moyen de super-condamnation 37 (cf figure 3b).

Un tel moyen 37 est généralement activé en cas de rupture du corps d'antivol 3 ou d'arrachage du rotor 11 du verrou 5.

Ce moyen supplémentaire 37 permet alors de renforcer la sécurité également en cas de tentative d'effraction en force avec rupture du corps d'antivol ou arrachage du rotor.

À titre d'exemple, le moyen supplémentaire 37 peut comporter un élément déclencheur 39 solidaire du rotor 11 et un élément de blocage 41, tel qu'un pion de blocage 41, relié au déclencheur 39.

Le moyen supplémentaire 37 comporte en outre un moyen de rappel, tel qu'un ressort de compression 43, qui sollicite le pion 41 vers une position active de blocage du pêne 7, dans laquelle le pion 41 engage une encoche associée 45 prévue sur le pêne 7.

L'élément déclencheur 39 est maintenu par le rotor 5, dans une position de maintien du pion de blocage 41 hors de l'encoche 45 du pêne 7.

En cas de tentative d'effraction, dite forte, avec rupture du corps d'antivol 3 ou d'arrachage du rotor 5, le pion 41 vient engager l'encoche 45 du pêne 7, sous l'action du ressort 43, pour empêcher tout déplacement du pêne 7.

## Revendications

1. Dispositif antivol pour colonne de direction de véhicule automobile, ledit dispositif comportant :
- un pêne (7) monté mobile en translation dans ledit dispositif entre une position de verrouillage de la colonne de direction et une position de libération de ladite colonne, et
- un verrou (5) comprenant un moyen de commande (8) de déplacement dudit pêne, ledit verrou (5) étant mobile entre une position neutre et une position de fonctionnement,
dans lequel ledit dispositif antivol comporte en outre un moyen de blocage (9) en translation dudit pêne (7) commandé par ledit moyen de commande (8) entre une position active dans laquelle ledit moyen de blocage (9) bloque ledit pêne (7) en translation de manière à maintenir ledit pêne (7) en position de verrouillage lorsque ledit verrou (5) est en position neutre, et une position de repos dans laquelle ledit moyen de blocage (9) libère ledit pêne (7) lorsque ledit verrou est en position de fonctionnement,
**caractérisé en ce que** ledit moyen de blocage (9) comprend un levier (19) pivotant présentant une première extrémité (21) en contact avec ledit moyen de commande (8) et une deuxième extrémité opposée (23) configurée pour s'opposer au déplacement dudit pêne (7).

2. Dispositif selon la revendication 1, **caractérisé en ce que** ladite deuxième extrémité (23) est configurée pour intercepter la trajectoire dudit pêne (7), de manière à bloquer directement ledit pêne (7).

3. Dispositif selon la revendication 1, **caractérisé en ce que** ladite deuxième extrémité (23) est configurée pour intercepter un organe de commande dudit moyen de commande (8), de manière à bloquer indirectement ledit pêne (7) via ledit organe de commande.

4. Dispositif selon l'une quelconque des revendications 1 à 3, **caractérisé en ce que** :
- ledit levier (19) présente une première branche (19a) terminée par la première extrémité (21) et une deuxième branche (19b) terminée par la deuxième extrémité (23), lesdites branches (19a, 19b) étant sensiblement inclinées l'une par rapport à l'autre, et **en ce que**
- l'axe de pivotement (A) dudit levier (19) se situe à la jonction entre lesdites branches (19a, 19b).

5. Dispositif selon la revendication 4, **caractérisé en ce que** ledit levier (19) comporte un pivot (19c) à la jonction entre les deux branches (19a, 19c).

6. Dispositif selon l'une des revendications 4 ou 5, **caractérisé en ce que** ledit levier (19) présente une forme générale sensiblement en " L ".

7. Dispositif selon l'une quelconque des revendications précédentes, **caractérisé en ce que** ledit moyen de commande (8) présente une rampe (27) de guidage dudit moyen de blocage (9).

8. Dispositif selon l'une quelconque des revendications précédentes, **caractérisé en ce que** le verrou (5) comporte un rotor (11) et **en ce que** ledit moyen de commande (8) comporte une came (15) solidarisée audit rotor (11) pour commander le déplacement dudit pêne (7) et le mouvement dudit moyen de blocage (9).

9. Dispositif selon l'une quelconque des revendications 1 à 6 prise en combinaison avec les revendications 7 et 8, **caractérisé en ce que** ladite came (15) présente une surface de came (25) et une cavité (29) sur la surface de came (25) pour recevoir la première extrémité (21) dudit levier (19) en position active, et **en ce que** ladite cavité (29) est délimitée par une face sensiblement en pente formant rampe de guidage (27) pour la première extrémité (21) dudit levier (19).

10. Dispositif selon l'une des revendications 8 ou 9, **caractérisé en ce que** ledit moyen de commande (8) comporte en outre une tirette (16) commandée en déplacement par ladite came (15).

11. Dispositif selon la revendication précédente, **caractérisé en ce que** le levier (19) est monté mobile dans un évidement complémentaire (20) de la tirette (16).

12. Dispositif selon l'une quelconque des revendications précédentes, **caractérisé en ce que** ledit moyen de blocage (9) comporte un moyen de rappel en position active.

13. Dispositif selon la revendication 12, **caractérisé en ce que** ledit moyen de rappel comporte un ressort de compression (35).

14. Dispositif selon l'une quelconque des revendications précédentes, **caractérisé en ce qu'**il comporte en outre un moyen de blocage supplémentaire (37) dudit pêne (7) comprenant un élément déclencheur (39) solidarisé au rotor (11) dudit verrou (5), un élément de blocage (41) relié audit élément déclencheur (39) et un moyen de rappel (43) configuré pour solliciter ledit élément de blocage (41) vers une position active de blocage dudit pêne (7) lorsque ledit élément déclencheur (39) est activé.

15. Colonne de direction pour véhicule automobile, **caractérisée en ce qu'**elle comporte un dispositif antivol conforme à l'une quelconque des revendications précédentes.

## Patentansprüche

1. Diebstahlschutzvorrichtung für eine Lenksäule eines Kraftfahrzeugs, wobei die besagte Vorrichtung umfasst:
- einen in der besagten Vorrichtung zwischen einer Verriegelungsposition der Lenksäule und einer Freigabeposition der besagten Säule translatorisch beweglich montierten Sperrbolzen (7), und
- einen Riegel (5), ein Steuerungsmittel (8) zum Verschieben des besagten Sperrbolzens umfassend, wobei der besagte Riegel (5) zwischen einer neutralen Position und einer Betriebsposition beweglich ist,
wobei die besagte Diebstahlschutzvorrichtung darüber hinaus ein Blockiermittel (9) für die translatorische Bewegung des besagten Sperrbolzens (7) umfasst, das vom besagten Steuerungsmittel (8) zwischen einer aktiven Position, in der das besagte Blockiermittel (9) den besagten Sperrbolzen (7) bei der translatorischen Bewegung blockiert, um den besagten Sperrbolzen (7) in der Verriegelungsposition zu halten, wenn der besagte Riegel (5) in der neutralen Position ist, und einer Ruheposition gesteuert wird, in der das besagte Blockiermittel (9) den besagten Sperrbolzen (7) freigibt, wenn der besagte Riegel in der Betriebsposition ist,
**dadurch gekennzeichnet, dass** das besagte Blockiermittel (9) einen Schwenkhebel (19) umfasst, der ein erstes Ende (21) in Kontakt mit dem besagten Steuerungsmittel (8), und ein zweites gegenüberliegendes Ende (23) aufweist, das konfiguriert ist, um sich der Bewegung des besagten Sperrbolzens (7) zu widersetzen.

2. Vorrichtung nach Anspruch 1, **dadurch gekennzeichnet, dass** das besagte zweite Ende (23) konfiguriert ist, um den Bahnverlauf des besagten Sperrbolzens (7) abzufangen, um den besagten Sperrbolzen (7) direkt zu blockieren.

3. Vorrichtung nach Anspruch 1, **dadurch gekennzeichnet, dass** das besagte zweite Ende (23) konfiguriert ist, um ein Steuerungsorgan des besagten Steuerungsmittels (8) abzufangen, um den besagten Sperrbolzen (7) indirekt über das besagte Steuerungsorgan zu blockieren.

4. Vorrichtung nach einem der Ansprüche 1 bis 3, **dadurch gekennzeichnet, dass**:
- der besagte Hebel (19) einen ersten Schenkel (19a) aufweist, der durch das erste Ende (21) abgeschlossen wird, und einen zweiten Schenkel (19b), der durch das zweite Ende (23) abgeschlossen wird, wobei die besagten Schenkel (19a, 19b) in etwa zueinander geneigt sind, und dadurch, dass
- sich die Schwenkachse (A) des besagten Hebels (19) an der Schnittstelle zwischen den besagten Schenkeln (19a, 19b) befindet.

5. Vorrichtung nach Anspruch 4, **dadurch gekennzeichnet, dass** der besagte Hebel (19) einen Drehzapfen (19c) an der Schnittstelle zwischen den beiden Schenkeln (19a, 19c) umfasst.

6. Vorrichtung nach einem der Ansprüche 4 oder 5, **dadurch gekennzeichnet, dass** der besagte Hebel (19) eine allgemeine Form in etwa in Form eines "L" aufweist.

7. Vorrichtung nach einem der vorhergehenden Ansprüche, **dadurch gekennzeichnet, dass** das besagte Steuerungsmittel (8) eine Rampe (27) zum Führen des besagten Blockiermittels (9) aufweist.

8. Vorrichtung nach einem der vorhergehenden Ansprüche, **dadurch gekennzeichnet, dass** der Riegel (5) einen Rotor (11) umfasst, und dadurch, dass das besagte Steuerungsmittel (8) einen Nocken (15) umfasst, der fest mit dem besagten Rotor (11) verbunden ist, um die Verschiebung des besagten Sperrbolzens (7) und die Bewegung des besagten Blockiermittels (9) zu steuern.

9. Vorrichtung nach einem der Ansprüche 1 bis 6, in Verbindung mit den Ansprüchen 7 und 8, **dadurch gekennzeichnet, dass** der besagte Nocken (15) eine Nockenoberfläche (25) und eine Vertiefung (29) auf der Nockenoberfläche (25) aufweist, um das erste Ende (21) des besagten Hebels (19) in der aktiven Position aufzunehmen, und dadurch, dass die besagte Vertiefung (29) durch eine in etwa geneigte Fläche eingegrenzt wird, die eine Führungsrampe (27) für das erste Ende (21) des besagten Hebels (19) bildet.

10. Vorrichtung nach einem der Ansprüche 8 oder 9, **dadurch gekennzeichnet, dass** das besagte Steuerungsmittel (8) darüber hinaus eine Zuglasche (16) umfasst, die durch den besagten Nocken (15) in der Verschiebung gesteuert wird.

11. Vorrichtung nach dem vorhergehenden Anspruch, **dadurch gekennzeichnet, dass** der Hebel (19) beweglich in einer ergänzenden Ausnehmung (20) der Zuglasche (16) montiert ist.

12. Vorrichtung nach einem der vorhergehenden Ansprüche, **dadurch gekennzeichnet, dass** das besagte Blockiermittel (9) ein Rückstellmittel in die aktive Position umfasst.

13. Vorrichtung nach Anspruch 12, **dadurch gekennzeichnet, dass** das besagte Rückstellmittel eine Druckfeder (35) umfasst.

14. Vorrichtung nach einem der vorhergehenden Ansprüche, **dadurch gekennzeichnet, dass** sie darüber hinaus ein zusätzliches Blockiermittel (37) des besagten Sperrbolzens (7) enthält, ein Auslöseelement (39) umfassend, das fest mit dem Rotor (11) des besagten Riegels (5) verbunden ist, ein Blockierelement (41), das an das besagte Auslöseelement (39) angeschlossen ist, und ein Rückstellmittel (43), das konfiguriert ist, um das besagte Blockierelement (41) in eine aktive Position zum Blockieren des besagten Sperrbolzens (7) zu drängen, wenn das Auslöseelement (39) aktiviert ist.

15. Lenksäule für ein Kraftfahrzeug, **dadurch gekennzeichnet, dass** sie eine Diebstahlschutzvorrichtung nach einem der vorhergehenden Ansprüche umfasst.

## Claims

1. An anti-theft device for a steering column of a motor vehicle, said device including:
- a bolt (7) movably mounted in translation in said device between a position for locking the steering column and a position for releasing said column, and
- a lock (5) comprising means (8) for controlling the displacement of said bolt, said lock (5) being movable between a neutral position and an operating position,
wherein said anti-theft device further includes means (9) for blocking in translation said bolt (7) controlled by said control means (8) between an active position in which said blocking means (9) blocks said bolt (7) in translation so as to hold said bolt (7) in the locking position when said lock (5) is in the neutral position, and a rest position in which said blocking means (9) releases said bolt (7) when said lock is in the operating position,
**characterized in that** said blocking means (9) comprises a pivoting lever (19) having a first end (21) in contact with said control means (8) and a second opposite end (23) configured to oppose the displacement of said bolt (7).

2. The device according to claim 1, **characterized in that** said second end (23) is configured to intercept the path of said bolt (7), so as to directly block said bolt (7).

3. The device according to claim 1, **characterized in that** said second end (23) is configured to intercept a control member of said control means (8), so as to indirectly block said bolt (7) via said control member.

4. The device according to any one of claims 1 to 3, **characterized in that**:
- said lever (19) has a first branch (19a) terminated by the first end (21) and a second branch (19b) terminated by the second end (23), said branches (19a, 19b) being substantially inclined relative to one another, and **in that**
- the pivot axis (A) of said lever (19) is located at the junction between said branches (19a, 19b).

5. The device according claim 4, **characterized in that** said lever (19) includes a pivot (19c) at the junction between the two branches (19a, 19c).

6. The device according to any of claims 4 or 5, **characterized in that** said lever (19) has a substantially overall L-shape.

7. The device according to any one of the preceding claims, **characterized in that** said control means (8) has a guiding ramp (27) of said blocking means (9).

8. The device according to any one of the preceding claims, **characterized in that** the lock (5) includes a rotor (11) and **in that** said control means (8) includes a cam (15) secured to said rotor (11) in order to control the displacement of said bolt (7) and the movement of said blocking means (9).

9. The device according to any one of claims 1 to 6 taken in combination with claims 7 and 8, **characterized in that** said cam (15) has a cam surface (25) and a cavity (29) on the cam surface (25) in order to receive the first end (21) of said lever (19) in the active position, and **in that** said cavity (29) is delimited by a substantially sloped face forming a guide ramp (27) for the first end (21) of said lever (19).

10. The device according to any of claims 8 or 9, **characterized in that** said control means (8) further includes a pull-tab (16) controlled in displacement by said cam (15).

11. The device according to the preceding claim, **characterized in that** the lever (19) is movably mounted in a complementary recess (20) of the pull-tab (16).

12. The device according to any one of the preceding claims, **characterized in that** said blocking means (9) includes return means in the active position.

13. The device according to claim 12, **characterized in that** said return means includes a compression spring (35).

14. The device according to any one of the preceding claims, **characterized in that** it further includes an additional blocking means (37) of said bolt (7) comprising a trigger element (39) secured to the rotor (11) of said lock (5), a blocking element (41) connected to said trigger element (39) and a return means (43) configured to bias said blocking element (41) towards an active blocking position of said bolt (7) when said trigger member (39) is activated.

15. A steering column for a motor vehicle, **characterized in that** it includes an anti-theft device in accordance with any one of the preceding claims.
